# EUROPÄISCHE PATENTSCHRIFT

(11) **EP 2 119 883 B1**
(45) Veröffentlichungstag und Bekanntmachung des Hinweises auf die Patenterteilung: **10.11.2010**
(21) Anmeldenummer: 09157510.0
(22) Anmeldetag: 07.04.2009
(51) Int. Cl.: F01N 3/20

(54) **Kraftfahrzeug-SCR-Feststoff-Speicheranordnung**
Motor vehicle-SCR-particulate-storage assembly
Agencement de stockage de matière solide SCR pour véhicule automobile

(30) Priorität: 14.05.2008 DE 102008023437
(43) Veröffentlichungstag der Anmeldung: 18.11.2009
(73) Patentinhaber: Pierburg GmbH, 41460 Neuss (DE)
(72) Erfinder: Köster, Andreas, 45149 Essen (DE); Dismon, Heinrich, 52538 Gangelt (DE); Tönnesmann, Andres, Dr., 52062 Essen (DE); Nigrin, Sven, 40468 Düsseldorf (DE)
(74) Vertreter: Patentanwälte ter Smitten

(56) Entgegenhaltungen:
- US-A- 5 809 775
- US-A1- 2002 124 568
- US-A1- 2005 274 108
- US-A1- 2009 013 670

## Beschreibung

Die Erfindung bezieht sich auf eine Kraftfahrzeug-SCR-Feststoff-Speicheranordnung zur Versorgung eines Abgaskatalysators mit einem Ammoniak abspaltenden rieselfähigen Feststoff für die selektive katalytische Reduktion zur Verringerung der Stickoxid-Emission.

Zur Verringerung der Stickoxid-Emission in Kraftfahrzeug-Abgasen wird ein sogenannter SCR-Katalysator eingesetzt, in dem die selektive katalytische Reduktion von Stickoxiden in dem Abgas durchgeführt wird. Für diese Reduktion wird Ammoniak benötigt, das dem Abgas beigemischt wird. Das erforderliche Ammoniak wird nicht direkt, sondern beispielsweise in Form einer wässrigen Lösung dem Abgas beigemischt, die zuvor aus dem SCR-Feststoff erzeugt wurde.

Zur Speicherung des Feststoffes in rieselfähiger Form sind fahrzeugseitige Vorratsbehälter bekannt, in denen der Feststoff beispielsweise in pulverförmiger oder pelletförmiger Form als Vorrat für eine lange Betriebszeit gespeichert ist. Als ein derartiger SCR-Feststoff wird beispielsweise Harnstoff verwendet. Fest-Harnstoff hat hygroskopische Eigenschaften und bei zu hoher Feuchte geht die Rieselfähigkeit des Fest-Harnstoffs verloren oder geht der Fest-Harnstoff ungewollt in eine Harnstoff-Lösung über. Zur Förderung des Fest-Harnstoffs dient Luft, die zuvor in einem Gasentfeuchter auf ein unkritisches Feuchteniveau gebracht werden muss. Die Kapazität bzw. die Lebensdauer eines Gasentfeuchters ist begrenzt.

Aus US 5809775 ist eine Feutstoff-Speicheranordnung mit einem Füllkissen bekannt.

Aus DE 102 51 498 A1 ist eine Speicheranordnung bekannt, bei der der Fest-Harnstoff in kugelförmigen Pellets gespeichert ist.

Aus DE 100 52 077 A1 ist eine Speicheranordnung mit einem Speicherbehälter für eine flüssige Harnstofflösung bekannt. In dem Speicherbehälter ist eine Druckmembran vorgesehen, die dem Ausdrücken der flüssigen Harnstofflösung aus dem Speicherbehälter dient.

Aufgabe der Erfindung ist es demgegenüber, eine Kraftfahrzeug-SCR-Feststoff-Speicheranordnung mit vereinfachter Trockenhaltung des Feststoffs zu schaffen.

Diese Aufgabe wird erfindungsgemäß gelöst mit den Merkmalen des Patentanspruches 1.

Die erfindungsgemäße Kraftfahrzeug-SCR-Feststoff-Speicheranordnung weist einen Feststoff-Speicherbehälter zum Speichern von SCR-Feststoff auf, wobei der Speicherbehälter eine Feststoff-Auslassöffnung zur Ausleitung des Feststoffes zur bestimmungsgemäßen Verwendung aufweist. Ferner ist ein Füllkissen vorgesehen, das innerhalb des Speicherbehälters angeordnet ist, und das eine flexible und gasdichte Kissenhülle mit einer Fluidöffnung zum Zu- und Abführen eines Kissenfluides aufweist. Schließlich ist eine Kissenfluid-Versorgungsvorrichtung vorgesehen, die mit der Öffnung des Füllkissens verbunden ist und dieses bedarfsweise mit Kissenfluid versorgt. Das Füllkissen reduziert das Leervolumen, d. h. das Volumen, das nicht durch die Feststoff-Schüttung gebildet wird, auf annähernd Null. Das Leervolumen wird durch das expandierte Füllkissen ausgefüllt. Das Füllkissen besteht aus einer flexiblen sowie gas- und feuchtigkeitsdichten Kissenhülle. Das mit dem Feststoff in unmittelbarer Verbindung stehende Volumen innerhalb des Speicherbehälters wird auf diese Weise erheblich reduziert. Dadurch wird auch ein entsprechender Eintrag an Feuchtigkeit in den Feststoff in den Speicherbehälter erheblich reduziert. Ferner wird durch das Füllkissen der staubartige oder pelletartige Feststoff in dem Speicherbehälter fixiert, d. h. der Feststoff kann sich nicht mehr frei in dem gesamten Volumen des Speicherbehälters bewegen.

Da eine ständige Zuführung getrockneter Luft in das Feststoff-Volumen nicht oder nur noch in sehr geringem Maße erforderlich ist, kann ein Gasentfeuchter zur Bereitstellung entsprechend entfeuchteten Gases verkleinert werden bzw. können seine Verbrauchszyklen entsprechend verlängert werden.

Durch die Kissenfluid-Versorgungsvorrichtung kann das Füllkissen bedarfsweise vergrößert oder verkleinert werden. Grundsätzlich kommt als Kissenfluid sowohl eine Flüssigkeit als auch ein Gas in Frage.

Gemäß einer bevorzugten Ausgestaltung ist das Kissenfluid jedoch ein Gas, und besonders bevorzugt Luft. Die Versorgungsvorrichtung ist demgemäß eine Gaspumpe bzw. ein Gaskompressor.

Gemäß einer bevorzugten Ausgestaltung ist die vorgenannte Kissenfluid-Versorgungsvorrichtung über eine Förderleitung mit dem Speicherbehälter verbunden. Die Versorgungsvorrichtung versorgt also sowohl das Füllkissen als auch den Speicherbehälter mit Gas. Da zur Förderung des Feststoffes aus dem Vorratsbehälter heraus zur eigentlichen Anwendung ohnehin eine Gaspumpe erforderlich ist, kann durch die Kopplung der Versorgungsvorrichtung sowohl mit der Förderleitung als auch mit dem Füllkissen der Einsatz einer zusätzlichen Versorgungsvorrichtung vermieden werden. Der technische Mehraufwand für die Bereitstellung des Kissenfluides ist daher relativ gering.

Vorzugsweise ist hinter der Versorgungsvorrichtung ein Umschaltventil angeordnet, das die Versorgungsvorrichtung wahlweise mit der Förderleitung oder der Kissenfluid-Leitung verbindet. Durch einfaches Umschalten des Umschaltventiles wird also die als Gaspumpe bzw. Gaskompressor ausgebildete Versorgungsvorrichtung entweder auf das Füllkissen oder aber auf den den Feststoff enthaltenden Bereich des Speicherbehälters durchgeschaltet. Die nicht durchgeschaltete Leitung ist jeweils geschlossen, sodass kein Fluid aus ihr entweichen kann. Auf diese Weise ist beispielsweise das Fluidvolumen des Füllkissens abgeschlossen, solange das Umschaltventil auf die Förderleitung durchgeschaltet ist.

Vorzugsweise ist im Verlauf der Kissenfluid-Leitung zwischen der Versorgungsvorrichtung und dem Füllkissen ein Drucksensor angeordnet, der auf diese Weise den Fluiddruck in dem Füllkissen ermittelt. Aus dem gemessenen Kissenfluid-Druck können Rückschlüsse gezogen werden auf die Dichtheit des Füllkissens, das Füllkissen-Volumen etc.

Gemäß einer bevorzugten Ausgestaltung weist der Speicherbehälter eine durch einen Verschlussdeckel verschließbare Nachfüllöffnung zum Nachfüllen von Feststoff auf, wobei an dem Verschlussdeckel das Füllkissen befestigt ist. Ferner weist die Nachfüllöffnung die Fluidöffnung des Füllkissens auf. Das Füllkissen kann bei jeder Neubefüllung des Speicherbehälters mit Feststoff in zusammengerollter oder -gefalteter Form im oder am Verschlussdeckel angebracht sein, und entfaltet sich erst, nachdem der Verschlussdeckel die Nachfüllöffnung verschließt und das Füllkissen erstmals mit dem Kissenfluid beaufschlagt wird.

Hierdurch werden Relativbewegungen des Feststoffes in dem Speicherbehälter, hervorgerufen durch Fahrzeugschwingungen, erheblich reduziert, da sich das Feststoff-Volumen nicht frei bewegen kann.

Gemäß einer bevorzugten Ausführungsform ist vor der als Gaspumpe ausgebildeten Versorgungsvorrichtung ein mit dieser verbundener Gasentfeuchter angeordnet. Dies ist jedoch nur dann sinnvoll und erforderlich, wenn die Kissenfluid-Versorgungsvorrichtung auch als Versorgungsvorrichtung für das über die Förderleitung in den Speicherbehälter bei Bedarf eingeleitete Förderfluid benutzt wird.

Gemäß einer bevorzugten Ausgestaltung weist der Speicherbehälter eine Feststoff-Auslassöffnung auf, mit der die Fluidöffnung, z. B. über eine externe Leitung, verbunden ist. Über diese Verbindung kann die Kissenhülle zum Zwecke des Druckausgleiches vorübergehend Gas aufnehmen bzw. abgeben. Auf diese Weise kann hinter der Auslassöffnung ein relativ gleichbleibender Fluid-Druck und -Fluss sichergestellt werden, der Voraussetzung für eine Abgasreinigung gleichbleibender Qualität ist.

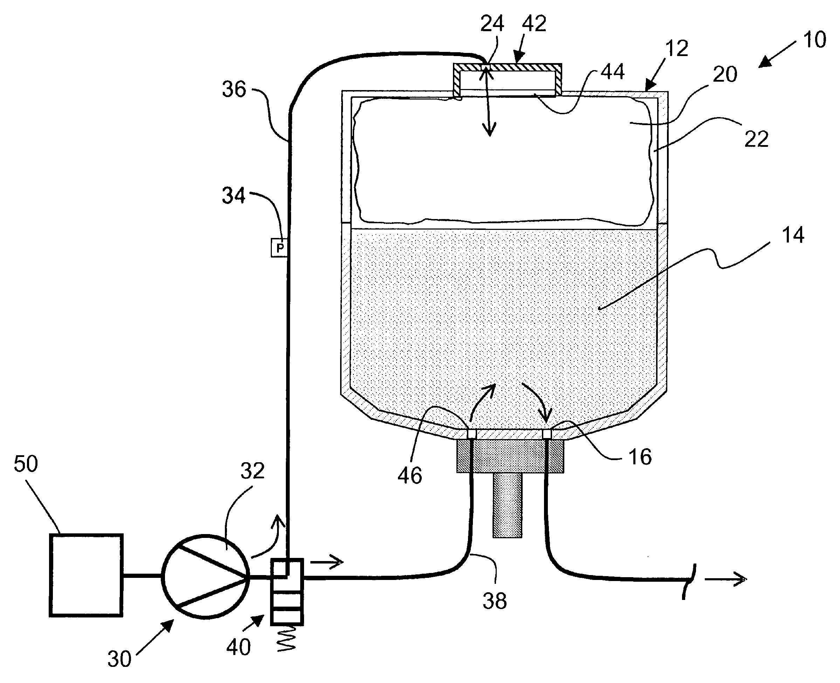

Im Folgenden wird ein Ausführungsbeispiel der Erfindung anhand der Zeichnung näher erläutert.

Die Zeichnung zeigt in schematischer Darstellung eine Kraftfahrzeug-SCR-Feststoff-Speicheranordnung.

In der Figur ist eine Kraftfahrzeug-SCR-Feststoff-Speicheranordnung 10 dargestellt, die im Wesentlichen einen SCR-Feststoff-Speicherbehälter 12 zum Speichern von pulverförmigem, granulatartigem oder pelletartigem und rieselfähigem SCR-Feststoff 14 sowie ein Füllkissen 20 und eine Kissenfluid-Versorgungsvorrichtung 30 aufweist, die mit einer Öffnung 24 des Füllkissens 20 verbunden ist. Als Feststoff 14 wird Harnstoff verwendet, es kommen jedoch auch andere Substanzen in Frage.

Der Feststoff-Speicherbehälter 12 ist gasdicht ausgebildet und weist eine Verschlussdeckel-Öffnung 44, eine Transportgas-Öffnung 46 und eine Feststoff-Auslassöffnung 16 auf. Die Verschlussdeckel-Öffnung 44 ist durch einen Verschlussdeckel 42 verschlossen, der eine Fluidöffnung 24 zum Zu- und Abführen eines Kissenfluides aufweist. Das Füllkissen 20 sitzt in dem Verschlussdeckel 42 und weist eine gas- und feuchtigkeitsdichte Kissenhülle 22 aus einem flexiblen Kunststoff auf.

Die Kissenfluid-Versorgungsvorrichtung 30 wird durch eine Gaspumpe 32 gebildet, die das Kissenfluid bzw. das Transportfluid, vorliegend Luft, zu einem Umschaltventil 40 pumpt, das in seiner der Figur dargestellten Füllposition die Gaspumpe 32 mit einer Kissenfluid-Leitung 36 verbindet, die in die Fluidöffnung 24 des Verschlussdeckels 42 mündet. Der Gaspumpe 32 ist ein Gasentfeuchter 50 vorgeschaltet, in dem die angesaugte Umgebungs-Luft entfeuchtet wird.

Das Umschaltventil 40 kann für die Beaufschlagung des Abgases mit SCR-Feststoff in die in der Figur nicht dargestellte Betriebsposition umgeschaltet werden, in der die Gaspumpe 32 mit einer Förderleitung 38 verbunden ist, die in die Transportgas-Öffnung 46 mündet. Durch das in den Feststoff 14 innerhalb des Speicherbehälters 12 eindringende und durch die Auslassöffnung 16 den Speicherbehälter 12 wieder verlassende Transportgas wird der rieselfähige Feststoff mitgerissen und zum Applikationsort transportiert.

Im Verlauf der Kissenfluid-Leitung 36 ist ein Drucksensor 34 angeordnet, mit dem der Fluiddruck festgestellt werden kann. Über den Fluiddruck wiederum kann beispielsweise über die Generierung und druckmäßige Auswertung von kurzen Druckstößen auf das Gasvolumen in dem Füllkissen 20, und damit auf das Feststoff-Volumen in dem Speicherbehälter 12 geschlossen werden.

Bei Betrieb des Fahrzeuges wird in regelmäßigen Abständen das Umschaltventil für eine begrenzte Zeit in seine in der Figur dargestellte Füll-Position geschaltet, um das Füllkissen 20 regelmäßig bis zu einem festgelegten Grenzdruck zu füllen, dessen Erreichen durch den Drucksensor 34 festgestellt wird. Spätestens nach Erreichen des Grenzdruckes wird das Umschaltventil 40 wieder zurückgeschaltet in seine Transportposition.

Mit der beschriebenen Anordnung wird das feststofffreie Leervolumen innerhalb des Speicherbehälters 12 ausgefüllt und vollständig isoliert von dem Feststoff-Volumen. Hierdurch wird der Eintrag an Feuchtigkeit in den Feststoff 14 erheblich vermindert, wodurch wiederum die Betriebssicherheit verbessert wird. Ferner kann sich das Feststoff-Volumen nur noch sehr eingeschränkt innerhalb des Speicherbehälters bewegen.

## Patentansprüche

1. Kraftfahrzeug-SCR-Feststoff-Speicheranordnung (10) mit
einem Feststoff-Speicherbehälter (12) zum Speichern von rieselfähigem SCR-Feststoff (14), wobei der Speicherbehälter (12) eine Feststoff-Auslassöffnung (16) aufweist,
einem Füllkissen (20), das innerhalb des Speicherbehälters (12) angeordnet ist, und das eine flexible und gasdichte Kissenhülle (22) mit einer Fluidöffnung (24) zum Zu- und Abführen eines Kissenfluides aufweist, und
eine Kissenfluid-Versorgungsvorrichtung (30), die mit der Öffnung (24) des Füllkissens (20) verbunden ist und dieses bedarfsweise mit Kissenfluid versorgt.

2. Kraftfahrzeug-SCR-Feststoff-Speicheranordnung nach Anspruch 1, wobei an dem Speicherbehälter (12) eine Transportgas-Öffnung (46) vorgesehen ist, durch die ein Transportgas in den Speicherbehälter (12) eingeleitet werden kann.

3. Kraftfahrzeug-SCR-Feststoff-Speicheranordnung nach Anspruch 1 oder 2, wobei das Kissenfluid ein Gas, vorzugsweise Luft, und die Versorgungsvorrichtung (30) eine Gaspumpe (32) ist.

4. Kraftfahrzeug-SCR-Feststoff-Speicheranordnung nach einem der vorangegangenen Ansprüche, wobei ein Drucksenor (34) im Verlauf einer Kissenfluid-Leitung (36) zwischen der Versorgungsvorrichtung (30) und dem Füllkissen (20) angeordnet ist.

5. Kraftfahrzeug-SCR-Feststoff-Speicheranordnung nach einem der vorangegangenen Ansprüche, wobei die Versorgungsvorrichtung (30) über eine Förderleitung (38) mit dem Speicherbehälter (12) verbunden ist.

6. Kraftfahrzeug-SCR-Feststoff-Speicheranordnung nach Anspruch 5, wobei hinter der Versorgungsvorrichtung (30) ein Umschaltventil (40) angeordnet ist, das die Versorgungsvorrichtung (30) wahlweise mit der Förderleitung (38) oder der Kissenfluid-Leitung (36) verbindet.

7. Kraftfahrzeug-SCR-Feststoff-Speicheranordnung nach einem der vorangegangenen Ansprüche, wobei der Speicherbehälter (12) eine durch einen Verschlussdeckel (42) verschließbare Nachfüllöffnung (44) aufweist, wobei an dem Verschlussdeckel (42) das Füllkissen (20) befestigt und die Fluidöffnung (24) vorgesehen ist.

8. Kraftfahrzeug-SCR-Feststoff-Speicheranordnung nach einem der Ansprüche 3 bis 7, wobei vor der Gaspumpe (32) ein mit der Gaspumpe (32) verbundener Gasentfeuchter (50) angeordnet ist.

9. Kraftfahrzeug-SCR-Feststoff-Speicheranordnung nach einem der Ansprüche 1 bis 8, wobei der Speicherbehälter eine Feststoff-Auslassöffnung aufweist, mit der die Fluidöffnung verbunden ist.

## Claims

1. Motor vehicle SCR particulate storage assembly (10) comprising
a particulate storage container (12) for storing free-flowing SCR particulate matter (14), said storage container (12) having an outlet opening (16) for the particulate matter,
a filler pad (20) arranged inside the storage container (12) and having a flexible and gastight pad skin (22) with a fluid opening (24) for feeding and discharging a pad fluid, and
a pad fluid supply device (30) connected to the opening (24) of the filler pad (20) and supplying the same with pad fluid as needed.

2. Motor vehicle SCR particulate storage assembly according to claim 1, wherein a transport gas opening (46) is provided in the storage container (12), through which a transport gas can be introduced into the storage container (12).

3. Motor vehicle SCR particulate storage assembly according to claim 1 or 2, wherein the pad fluid is a gas, preferably air, and the supply device (30) is a gas pump (32).

4. Motor vehicle SCR particulate storage assembly according to one of the preceding claims, wherein a pressure sensor (34) is arranged in the course of a pad fluid line (36) between the supply device (30) and the filler pad (20).

5. Motor vehicle SCR particulate storage assembly according to one of the preceding claims, wherein the supply device (30) is connected to the storage container (12) via a feed line (38).

6. Motor vehicle SCR particulate storage assembly according to claim 5, wherein a switch valve (40) is arranged behind the supply device (30), which selectively connects the supply device (30) to the feed line (38) or the pad fluid line (36).

7. Motor vehicle SCR particulate storage assembly according to one of the preceding claims, wherein the storage container (12) comprises a refill opening (44) adapted to be closed with a closure lid (42), the closure lid (42) having the filler pad (20) fastened thereto and having the fluid opening (24) provided therein.

8. Motor vehicle SCR particulate storage assembly according to one of claims 3 to 7, wherein a gas dryer (50) is arranged before the gas pump (32), said gas dryer being connected to the gas pump (32).

9. Motor vehicle SCR particulate storage assembly according to one of claims 1 to 8, wherein the storage container comprises a particulate outlet opening to which the fluid opening is connected.

## Revendications

1. Agencement de stockage de matière ruisselable solide SCR (10) pour véhicule automobile, comprenant
un récipient de matière solide (12) pour stocker de matière solide SCR (14) apte à écouler librement, ledit récipient de stockage (12) ayant une ouverture de sortie (16) pour la matière solide;
un cuisson de bourrage (20) disposé au sein du récipient de stockage (12) et comprenant un enveloppe de cuisson (22) flexible et étanche à gaz avec une ouverture pour fluide (24) servant á alimenter et évacuer un fluide de cuisson, et
un dispositif d'alimentation en fluide de cuisson (30) raccordé à l'ouverture (24) dudit cuisson de bourrage (20) et, en cas de besoin, fournissant de fluide de cuisson à celui.

2. Agencement de stockage de matière solide SCR pour véhicule automobile selon la revendication 1, dans lequel une ouverture (46) pour gaz de transport est prévue dans ledit récipient de stockage (12), à travers laquelle un gaz de transport peut être introduit dans ledit récipient de stockage (12).

3. Agencement de stockage de matière solide SCR pour véhicule automobile selon les revendications 1 ou 2, dans lequel ledit fluide de cuisson est un gaz, de préférence air, et le dispositif d'alimentation (30) est une pompe à gaz (32).

4. Agencement de stockage de matière solide SCR pour véhicule automobile selon l'une quelconque des revendications précédentes, dans lequel un capteur de pression (34) est prévu dans le tracé d'une conduite de fluide de cuisson (36) entre le dispositif d'alimentation (30) et le cuisson de bourrage (20).

5. Agencement de stockage de matière solide SCR pour véhicule automobile selon l'une quelconque des revendications précédentes, dans lequel le dispositif d'alimentation (30) est raccordé au récipient de stockage (12) par une conduite d'alimentation (38).

6. Agencement de stockage de matière solide SCR pour véhicule automobile selon la revendication 5, dans lequel une soupape d'inversion (40) est disposée derrière ledit dispositif d'alimentation (30), ladite soupape sélectivement connectant ledit dispositif d'alimentation (30) à ladite conduite d'alimentation (38) ou la conduite de fluide de cuisson (36).

7. Agencement de stockage de matière solide SCR pour véhicule automobile selon l'une quelconque des revendications précédentes, dans lequel ledit récipient de stockage (12) comprend une ouverture de remplissage (44) apte à être fermée par un couvercle de fermeture (42), ledit cuisson de bourrage (20) étant fixé audit couvercle de fermeture (42) qui est prévu avec ladite ouverture pour fluide (24).

8. Agencement de stockage de matière solide SCR pour véhicule automobile selon l'une quelconque des revendications 3 à 7, dans lequel un déshumidificateur de gaz (50) est disposé avant la pompe à gaz (32), ledit déshumidificateur étant raccordé à ladite pompe à gaz (32).

9. Agencement de stockage de matière solide SCR pour véhicule automobile selon l'une quelconque des revendications 1 à 8, dans lequel ledit récipient de stockage comprend une ouverture de sortie pour matière solide à laquelle est raccordée l'ouverture pour fluide.
